# FASCICULE DE BREVET EUROPEEN

(11) **EP 0 674 930 B1**
(45) Date de publication et mention de la délivrance du brevet: **22.12.1999**
(21) Numéro de dépôt: 95400561.7
(22) Date de dépôt: 15.03.1995
(51) Int. Cl.: B01D 29/05, B01D 29/64, B01D 29/66, B01D 29/82, B01D 29/94, B01D 29/96

(54) **Appareil pour la séparation par filtration d'une phase solide et d'une phase liquide à partir d'une boue, procédé de filtration correspondant et utilisation dudit appareil pour le traitement du lisier**
Filtrationsvorrichtung zur Feststoff-flüssigkeitstrennung aus einem Schlamm, entsprechendes Filtrationsverfahren und Gebrauch dieser Vorrichtung zur Güllebehandlung
Filtration apparatus for solid-liquid separation from a sludge, corresponding filtration process and use of said apparatus for liquid manure treatment

(30) Priorité: 31.03.1994 FR 9403814
(43) Date de publication de la demande: 04.10.1995
(73) Titulaire: GRANDE PAROISSE S.A., Puteaux, Hauts de Seine (FR)
(72) Inventeur: Norais, Marcel, F-44260 Savenay (FR)
(74) Mandataire: Haicour, Philippe

(56) Documents cités:
- DE-C- 273 107
- FR-A- 1 437 606

## Description

La présente invention concerne un appareil pour la séparation par filtration d'une phase solide et d'une phase liquide à partir d'une boue, bouillie ou suspension, un procédé de séparation par filtration susceptible d'être mis en oeuvre dans ledit appareil et l'utilisation dudit appareil pour le traitement du lisier. Pour la suite, on utilisera le terme générique "boue" pour désigner toute suspension ou dispersion d'une phase solide particulaire dans au moins une phase liquide.

Il est bien connu qu'il est nécessaire, dans de nombreuses industries, de traiter une boue pour séparer une phase solide d'une phase liquide. On peut plus particulièrement citer le traitement des lisiers pour obtenir, d'une part, des matières solides utilisables comme compost ou engrais et, d'autre part, une solution clarifiée, dépolluée et désodorisée ; mais on peut citer également le traitement des effluents et boues de stations d'épuration et les séparations de phases destinées, notamment, à améliorer les rendements dans les industries agroalimentaires (par exemple laiterie, fromagerie ou préparation d'huiles, de café, de jus de fruits et de légumes, d'amidon ou de surimi), dans les industries pharmaceutique ou cosmétique et dans l'industrie chimique.

La présente invention concerne plus particulièrement un appareil pour la séparation par filtration, dans lequel on exerce pendant l'opération de filtration une pression sur la boue, de façon à accélérer la filtration de la phase liquide et à séparer, sur le filtre, une phase solide sous forme d'un gâteau bien essoré ayant une faible teneur résiduaire en liquide, le gâteau étant ensuite détaché mécaniquement du filtre.

On connaît des appareils de ce type, dans lesquels on introduit la boue ou suspension entre deux bandes filtrantes, et on fait passer ensuite les deux bandes entre une ou plusieurs paires de rouleaux. Il est également connu, par exemple selon EP-A 295 339, de comprimer la boue ou la suspension dans un espace compris entre un tambour rotatif et un filtre constitué par une bande entourant le tambour rotatif et en contact avec celui-ci sur un segment de cylindre déterminé, le filtre sous forme de bande pouvant servir de courroie d'entraînement du cylindre rotatif. Ces appareils comportant des bandes filtrantes sont relativement fragiles, les bandes devant être fréquemment changées et ne permettent généralement pas d'obtenir un gâteau ayant une teneur en humidité aussi faible que désiré et de traiter des quantités importantes de boues.

L'invention concerne un appareil, qui est robuste, ne comportant ni bande filtrante, ni partie rotative, qui permet d'améliorer l'essorage du gâteau de filtration et d'obtenir une phase liquide ayant une faible teneur en matières en suspension et qui permet de traiter des quantités importantes de boues. Dans cet appareil, on exerce une pression sur la boue à l'aide d'un piston dans une chambre de filtration comportant un filtre, puis on extrait le filtre de la chambre de filtration et on balaie la surface du filtre extrait de la chambre à l'aide d'un dispositif de râclage.

La présente invention a donc pour premier objet un appareil de séparation par filtration d'une phase solide et d'une phase liquide à partir d'une boue, ledit appareil comportant, d'une part, un filtre et un moyen de compression pour exercer une pression sur la boue au cours de la filtration, de façon à obtenir sur le filtre un gâteau de phase solide et à recueillir une phase liquide ayant traversé le filtre, et, d'autre part, un dispositif de râclage pour détacher ledit gâteau de la surface du filtre, caractérisé par le fait qu'il comporte une chambre de filtration et que le moyen de compression est un piston susceptible d'un mouvement relatif de translation par rapport à ladite chambre de filtration, le mouvement relatif piston/chambre s'effectuant de façon sensiblement étanche aux liquides, le filtre étant susceptible d'un mouvement relatif de translation par rapport à ladite chambre de filtration entre une position de filtration où ledit filtre forme une paroi de ladite chambre de filtration et une position de râclage où le filtre est à l'extérieur de ladite chambre de filtration, et que le dispositif de râclage est susceptible de balayer la surface du filtre, lorsque la filtre est en position de râclage, pour détacher du filtre, le gâteau de phase solide.

De préférence, la chambre de filtration est fixe et le piston se déplace selon l'axe de la chambre de filtration, entre une position dite "rétractée" permettant le remplissage de la chambre de filtration et une position de compression voisine du filtre en fin de filtration, alors que le filtre est en position de filtration. Le filtre se déplace, de préférence, avantageusement selon le même axe que le piston. Le dispositif de râclage peut avantageusement se déplacer dans un plan perpendiculaire à l'axe de la chambre de filtration, son déplacement étant, de préférence, une translation rectiligne.

La chambre de filtration est, de préférence, munie d'une conduite d'alimentation en boue comportant une valve, ladite conduite débouchant dans ladite chambre de filtration entre le piston en position rétractée et le filtre en position de filtration. La chambre de filtration peut également être munie d'une conduite d'alimentation en eaux de lavage du gâteau de filtration qui s'ouvre soit directement dans la chambre de filtration, soit dans la conduite d'alimentation en boue, avantageusement en aval de la vanne de la conduite d'alimentation.

Le filtre fait, de préférence, partie d'un ensemble formant caisson, ledit filtre constituant la face dudit caisson tournée vers ledit piston et un conduit de soutirage de la phase liquide s'ouvrant dans une paroi du caisson autre que celle constituée par le filtre, de préférence, dans la paroi opposée au filtre. Avantageusement, ledit caisson est relié à une source d'air, de préférence d'air comprimé, permettant de souffler de l'air à travers le filtre de façon à le nettoyer. Selon un mode de réalisation préféré, le caisson comporte une rampe de façon à souffler des jets d'air à travers le filtre.

Le dispositif de râclage peut être tout dispositif connu tel qu'un couteau, une lame souple, un râteau ou une brosse.

L'appareil peut comporter une seconde chambre communiquant à une de ses extrémités avec la chambre de filtration, qui est avantageusement ouverte à son extrémité opposée; cette seconde chambre contient le filtre en position de râclage, après extraction de la première chambre et ses parois ont essentiellement pour but de canaliser les particules de gâteau de phase solide détachées du filtre. Cette chambre seconde a, de préférence, des dimensions, en section transversale, supérieures à la première chambre, de façon à permettre au dispositif de râclage de balayer toute la surface du filtre et à la phase solide râclée de disposer d'un espace suffisant pour tomber du filtre. Mais, dans une variante, on peut remplacer la seconde chambre par un simple support (notamment une cornière) sur lequel est fixé le dispositif de râclage et, éventuellement, la chambre de filtration et le dispositif de translation du filtre.

L'appareil selon l'invention comporte avantageusement des vérins pour actionner le déplacement du piston, du filtre et, éventuellement, du dispositif de râclage. L'appareil peut également comporter les éléments nécessaires à un fonctionnement automatique en séquences incluant les sécurités usuelles ; ces éléments sont bien connus des techniciens.

L'appareil selon l'invention est, de préférence, disposé "verticalement", le piston et le filtre se déplaçant selon des axes verticaux et le dispositif de râclage se déplaçant dans un plan horizontal ; il serait cependant possible de le faire fonctionner en disposant horizontalement l'axe de la chambre de filtration.

La présente invention a pour deuxième objet un procédé de séparation par filtration, dans lequel on exerce une pression sur la boue au cours de la filtration, susceptible d'être mis en oeuvre dans l'appareil décrit.

Selon ce procédé :
- dans un premier stade, on introduit une quantité de boue à filtrer dans une chambre de filtration dont une paroi est constituée par un filtre;
- dans un deuxième stade, on exerce une pression sur la boue contenue dans la chambre de filtration de façon à obtenir sur le filtre un gâteau de phase solide et à recueillir une phase liquide après son passage à travers le filtre;
- dans un troisième stade, on supprime la pression, on extrait le filtre de la chambre de filtration de façon à l'amener à l'extérieur de ladite chambre de filtration, on râcle la surface du filtre portant le gâteau de filtration à l'aide d'un dispositif de râclage balayant la surface du filtre portant le gâteau, et on recueille la phase solide tombant du filtre,
- dans un quatrième stade, on ramène le filtre dans la position de filtration.

De préférence, entre le troisième et le quatrième stade, on souffle de l'air à travers le filtre de façon à le nettoyer. Entre le troisième et le quatrième stade, on peut également introduire un stade de lavage du gâteau de filtration.

De préférence, dans le premier stade, un piston constitue le couvercle de la chambre de filtration. Dans le deuxième stade, de préférence, on déplace longitudinalement ledit piston selon l'axe de la chambre de filtration en direction du filtre. Dans le troisième stade, on extrait, de préférence, le filtre de la chambre de filtration par un mouvement de translation selon l'axe de la chambre de filtration. Dans le quatrième stade, de préférence, on déplace le dispositif de râclage d'un mouvement de translation linéaire entre une position de repos et une position de fin de course pour laquelle la surface du filtre a été entièrement balayée. Lorsque le procédé comporte une opération de soufflage d'air à travers le filtre, cette opération est, de préférence, effectuée lorsque le dispositif de râclage est en position de fin de course.

La présente invention a pour troisième objet l'utilisation d'au moins un appareil selon l'invention dans le traitement du lisier, plus particulièrement du lisier de porc.

La description donnée ci-après, avec référence au dessin annexé, permettra de mieux comprendre l'invention.

Sur ce dessin :
- les figures 1 à 3 représentent de façon schématique, en coupe verticale, un appareil selon la présente invention à différents stades du processus de filtration ;
- la figure 4 représente plus en détail un appareil de filtration selon la présente invention ;
- la figure 5 représente de façon schématique une installation de traitement du lisier de porc utilisant trois appareils de filtration selon l'invention, disposés en série.

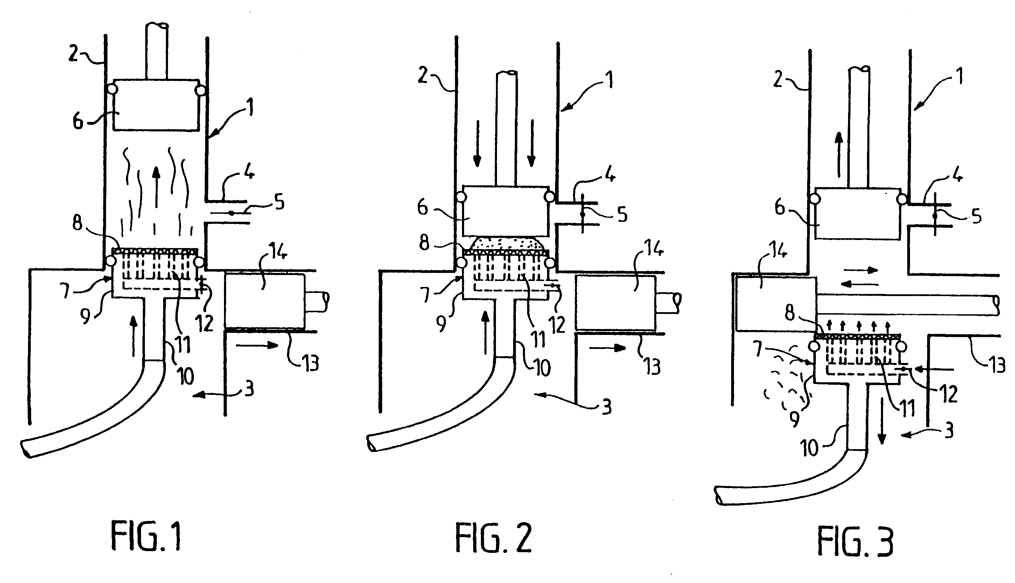

On voit sur les figures 1 à 3 que l'appareil selon l'invention, désigné dans son ensemble par la référence 1, est disposé "verticalement" ; il est constitué de deux chambres 2 et 3, situées l'une au dessus de l'autre et communiquant entre elles ; ces chambres sont de dimensions différentes, la chambre 3 ayant en section horizontale des dimensions supérieures à celles de la chambre 2. La chambre 2 est la chambre de filtration ; elle comporte une paroi latérale, dans laquelle débouche un conduit 4 d'alimentation en boue muni d'une valve 5. La valve 5 est avantageusement constituée par un robinet à boule, mais peut également être un clapet. La chambre 2 contient un piston 6 susceptible de coulisser, selon un axe vertical, de façon étanche aux liquides, dans la chambre 2 entre une position rétractée située au-dessus du conduit d'alimentation 4 (voir figure 1) et une position de compression du gâteau de phase solide (voir figure 2). Le piston 6 est actionné, notamment, par un système de vérin hydraulique non représenté. Un ensemble 7 formant caisson comportant un filtre 8 horizontal est monté dans l'appareil de façon à pouvoir se déplacer entre deux positions : une première position où l'ensemble 7 forme le fond de la chambre 2 (voir figure 1) et sépare la chambre 2 de la chambre 3 et une seconde position où il est extrait de la chambre 2 et il est disposé dans la chambre 3 (voir figure 3). L'ensemble 7 est constitué par un caisson 9, par exemple cylindrique, formé à sa partie supérieure par le filtre 8. Sur le fond du caisson 9 prend un conduit 10 de soutirage de la phase liquide. Dans le caisson 9 est disposée une rampe de soufflage d'air reliée par une vanne 12 à une source d'air comprimé. L'ensemble 7 est actionné en translation verticale, notamment par un système de vérin hydraulique (non représenté). La chambre 3 est ouverte à sa partie inférieure de façon à permettre le soutirage par gravité de la phase solide. Les parois de la chambre 3 guident les particules de gâteau de phase solide tombant du filtre 8 lors du râclage et empêchent la dispersion de ces particules, par exemple par le vent. Elle comporte, à sa partie supérieure, dans un logement latéral 13 faisant extérieurement saillie, un organe de râclage 14 susceptible de se déplacer linéairement en translation dans un plan horizontal de façon à râcler la surface supérieure du filtre 8 lorsque l'ensemble 7 est disposé dans la chambre 3 en position de râclage. Cet organe de râclage est, notamment, constitué par un couteau ou une lame souple. Il est, en particulier, actionné par un vérin hydraulique ou un moteur non représenté.

L'appareil fonctionne de la façon suivante. Dans un premier stade a) (voir figure 1) le piston 6 est en position rétractée et il est disposé au-dessus de la conduite d'alimentation en boue 4 et l'ensemble 7 forme le fond de la chambre 2. On ouvre la valve 5 du conduit 4 et on introduit une quantité de boue dans la chambre 2. Ensuite on ferme la valve 5, l'alimentation en boue de la chambre 2 étant alors interrompue. Dans un second stade b) (voir figure 2), on abaisse progressivement le piston 6 selon l'axe de la chambre de filtration 2 de façon à exercer une pression sur la boue et à accélérer la formation d'un gâteau de phase solide sur le filtre 8. La phase liquide traverse le filtre et elle est recueillie dans le caisson 7 puis soutirée du caisson par le conduit 10. Lorsqu'on ne soutire plus, ou pratiquement plus, de phase liquide par le conduit 10, dans un troisième stade c) (voir figure 3), on commence à ramener le piston 6 vers sa position rétractée et on abaisse l'ensemble 7 dans la chambre 3 par un mouvement de translation ayant le même axe que le piston jusqu'à un niveau tel que le moyen de râclage 14 puisse venir râcler la surface supérieure du filtre 8. Cette translation est notamment actionnée par des vérins. On actionne ensuite le dispositif de râclage 14 en translation linéaire dans un plan horizontal de façon à balayer toute la surface supérieure du filtre 8 et à faire tomber le gâteau dans la chambre 3. Les dimensions de la chambre 3 sont telles qu'elles permettent au dispositif de râclage 14 de balayer toute la surface du filtre et au gâteau de phase solide de tomber librement dans la chambre 3. La phase solide est recueillie par tout moyen connu à la partie inférieure ouverte de la chambre 3. La phase solide est par exemple recueillie dans un conteneur, une benne, un sac ou sur un tapis roulant. La phase solide recueillie peut éventuellement subir un traitement ultérieur, par exemple un traitement de séchage.

Après le troisième stade c), lorsque le moyen de râclage 14 est en fin de course ayant balayé toute la surface du filtre 8, on ouvre la valve 12 de façon à introduire de l'air comprimé dans la rampe 11. L'air traverse le filtre qui est ainsi nettoyé des particules de phase solide qui auraient pu y rester. Ensuite, on ramène le moyen de râclage 14 dans son logement 13, le moyen de râclage faisant tomber les particules de phase solide détachées du filtre par l'air comprimé dans la chambre 3.

Dans un quatrième stade d), le piston est ramené dans sa position rétractée représentée sur la figure 1 et on ramène l'ensemble 7 dans la position représentée sur la figure 1 où il forme le fond de la chambre 2. L'appareil est prêt à recevoir une nouvelle quantité de boue à traiter.

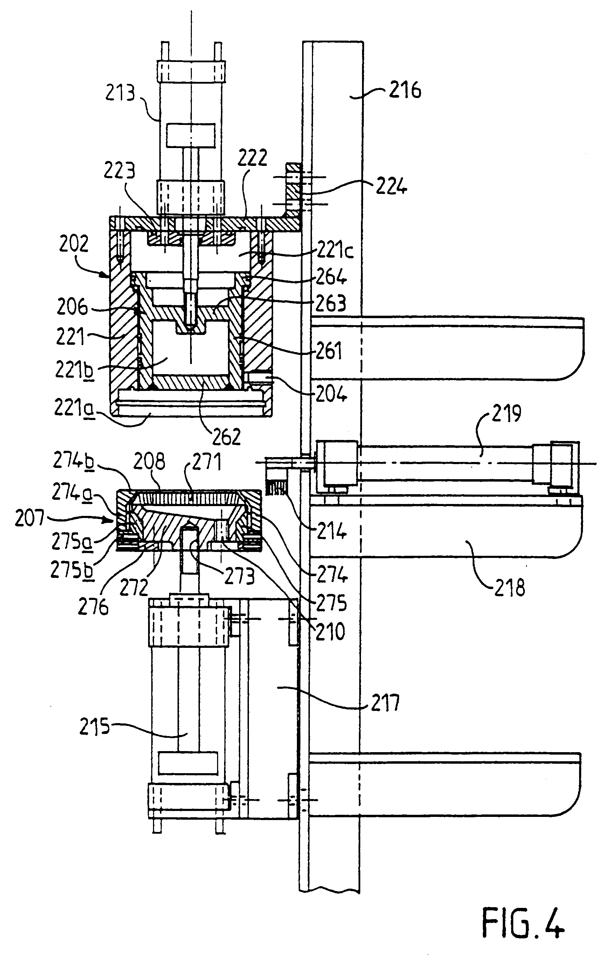

La figure 4 représente plus en détail un mode de réalisation d'un appareil de filtration selon la présente invention. Il comporte un cylindre 202 dans lequel se déplacent en translation un piston 206 et un ensemble 207 portant le filtre 208. Le piston 206 est actionné en translation par un vérin 213 et l'ensemble 207 est actionné en translation par un vérin 215. Le cylindre 202 et le vérin 215 sont fixés à une cornière 216, le vérin 215 étant fixé à la cornière 216 par l'intermédiaire d'un support 217. Le cylindre 202 est constitué par une paroi latérale 221 ; à sa partie supérieure, le cylindre 202 est fermé par un flasque 222 fixé sur le rebord supérieur de la paroi latérale 221 et muni d'une ouverture axiale pour le passage de la tige du vérin 213. Le corps du vérin 213 est fixé sur le flasque 222 et l'étanchéité entre le vérin 213 et le flasque 222 est assurée à l'aide d'un presse-étoupe 223 fixé sous le flasque 222. Le flasque 222 porte sur sa périphérie une bride perpendiculaire 224 servant à la fixation du cylindre 202 sur la cornière 216.

Le cylindre 202 comporte trois sections ayant des diamètres différents, grâce à la variation de l'épaisseur de la paroi 221. La première section 221a, située à sa partie inférieure, a un diamètre égal, au jeu nécessaire près, au diamètre extérieur de l'ensemble 207 portant le filtre 208, de façon que ledit ensemble 207 puisse venir s'y insérer exactement. Pour assurer l'étanchéité entre l'ensemble 207 et la section 221a, on prévoit des joints annulaires portés par le cylindre 202 et venant coopérer avec les parois latérale et frontale de l'ensemble 207 la figure 4 ne représente que les gorges de mise en place desdits joints. La seconde section 221b a un diamètre plus faible égal, au jeu nécessaire près, au diamètre externe du piston 206 ; dans sa paroi latérale est ménagé, à sa partie inférieure, un conduit d'alimentation 204 muni d'une valve (non représentée). La troisième section 221c a un diamètre supérieur à celui de la section 221b.

Le piston 206 est défini par une paroi cylindrique 261 ayant un diamètre externe égal, au jeu nécessaire près, au diamètre de la section 221b du cylindre 202. Selon le mode de réalisation représenté, cette paroi cylindrique comporte extérieurement trois gorges périphériques permettant de disposer des joints annulaires destinés à assurer l'étanchéité. A sa base, la paroi cylindrique 261 est fermée par un plateau plan soudé 262. A un niveau intermédiaire, est disposé un second plateau 263 qui est parallèle au premier et comporte un logement axial taraudé destiné à recevoir l'extrémité filetée de la tige du vérin 213. A sa partie supérieure, la paroi cylindrique 261 porte une collerette 264 dont le diamètre externe est égal, au jeu nécessaire près, au diamètre de la section 221c du cylindre 202 ; la surface latérale de la collerette 264 porte une gorge permettant de disposer un joint torique destiné à assurer l'étanchéité.

L'ensemble 207 est constitué d'une toile filtrante 208 serrée sur un appui 271 dans lequel sont ménagées de nombreuses ouvertures. L'appui 271 repose sur un corps 272 dont la surface supérieure est inclinée de façon à former un entonnoir s'ouvrant dans un conduit 210 de soutirage du liquide filtré qui est disposé en dehors de l'axe de l'ensemble 207. Sur la face inférieure du corps 272, on a ménagé axialement un alésage taraudé 273 destiné à recevoir l'extrémité du vérin 215. La paroi latérale du corps 272 est cylindrique à sa partie inférieure puis tronconique s'évasant vers le haut. La toile filtrante 208, son support 271 et le corps 272 sont maintenus ensemble à l'aide de trois pièces : en premier lieu, un écrou de serrage 274 comportant d'une part, à sa partie inférieure, une jupe cylindrique 274a munie sur sa face interne d'un pas de vis et, d'autre part, à sa partie supérieure, une collerette 274b orientée vers l'axe de l'écrou et qui s'appuie par un bord biseauté sur le bord biseauté correspondant de l'appui 271 de façon à maintenir par pincement la toile filtrante ; en second lieu, une bague 275 comportant une jupe cylindrique 275a, qui est munie sur sa face externe d'un pas de vis susceptible de coopérer avec le pas de vis de la jupe 274a et dont le bord supérieur est biseauté de façon à assurer un contact avec la partie tronconique de la paroi latérale du corps 272, ladite bague 275 comportant, à sa partie inférieure, une platine annulaire 275b sur le bord interne de laquelle se raccorde la jupe 275a ; et, en troisième lieu, une rondelle de démontage 276 ayant la forme d'un disque et munie, sur toute sa périphérie, d'alésages servant à la prise d'un outil de serrage et desserrage, cette rondelle étant disposée sous le corps 272 et étant solidarisée par des vis perpendiculaires à la toile 208, lesdites vis passant au travers de la rondelle par des alésages non représentés. Une fois la rondelle 276 fixée sur le corps 272, on peut visser et dévisser l'ensemble 207 sur l'extrémité filetée de la tige du vérin 215 sans provoquer la rotation relative du corps 272 et de l'écrou de serrage 274.

Sur la cornière 216, le système de râclage est fixé sur une console 218. Il est constitué par une brosse 214 fixée à l'extrémité de la tige d'un vérin 219 de façon à se déplacer de façon rectiligne et à frotter sur la toile de filtre 208 pour détacher le gâteau de filtration lorsque l'ensemble 207 est situé hors du cylindre 202 comme représenté sur la figure 4.

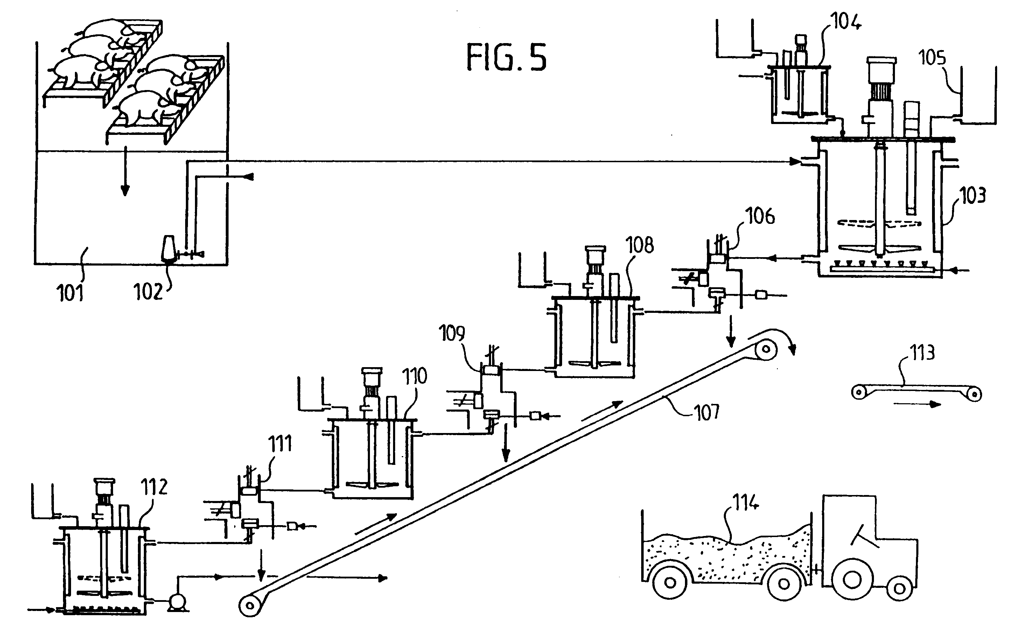

La figure 5 représente schématiquement l'utilisation de l'appareil de filtration selon l'invention dans un procédé de traitement du lisier de porc. Dans le procédé représenté sur la figure 5, on utilise trois appareils de filtration en série dans lesquels les filtres sont constitués par des grilles de diamètre nominal décroissant.

Comme on peut le voir sur la figure 5, on recueille le lisier de porc dans une fosse 101 ; il est tout d'abord homogénéisé à l'aide d'un ensemble pompe aératrice/hydroéjectrice 102 de façon à réduire la demande biologique en oxygène à 5 jours (DOB 5), la demande chimique en oxygène (DCO) et les matières en suspension (MES). Le lisier est ensuite pompé et envoyé dans un bac 103 où on ajuste le pH à l'aide de deux réactifs provenant du bac 104, par exemple de la soude ou de l'acide chlorhydrique de façon à neutraliser le lisier, et du réservoir 105, par exemple du superphosphate de calcium ou du chlorure ferrique de façon à réaliser la floculation. On élimine ainsi l'ammoniac, les amines et les acides gras. On envoie alors le lisier traité sur un premier appareil de filtration 106 comportant une grille relativement grossière (de diamètre nominal d'ouverture de maille d'environ 1 500 micromètres, par exemple) dans lequel on sépare une phase solide que l'on recueille sur une bande transporteuse 107 et une phase liquide que l'on introduit dans un bac 108 où on neutralise ladite phase liquide, par exemple avec de la soude. On introduit la phase liquide traitée dans un second appareil de filtration 109 comportant une grille de filtration plus fine (par exemple, de diamètre nominal d'ouverture de maille d'environ 500 micromètres) ; on sépare ainsi une phase solide que l'on recueille sur la bande transporteuse 107 d'une phase liquide que l'on envoie dans un bac 110. Dans le bac 110, la phase liquide est traitée par un réactif de désodorisation. Le produit désodorisé est envoyé dans un troisième appareil de filtration 111 comportant une grille fine (ayant, par exemple, un diamètre nominal d'ouverture de maille d'environ 100 micromètres). On sépare une phase solide que l'on recueille sur la bande transporteuse 107 et une phase liquide que l'on introduit dans un bac 112 où elle est aérée et traitée par un oxydant, par exemple H₂O₂ et/ou un perborate de sodium et un agent masquant d'odeur, par exemple l'acide undécylénique et/ou ses esters aliphatiques.

Si l'on souhaite réaliser une filtration avec un filtre ayant un diamètre nominal d'ouverture de maille inférieur à 40 micromètres, on utilise un filtre en nylon enserré entre deux grilles fines ayant, par exemple, un diamètre nominal d'ouverture de maille d'environ 100 micromètres.

La phase liquide sortant du bac 112 peut être rejetée comme eau de surface car elle est dépolluée et désodorisée. Les matières solides recueillies sur la bande transporteuse peuvent soit être envoyées vers une installation de séchage, par exemple à l'aide d'une bande transporteuse 113, soit être chargées dans une remorque de tracteur 114 ou un camion pour être compostées. Des essais ont montré que par traitement de 1 000 dm³ de lisier, on obtient 680 dm³ d'eau de surface et 320 dm³ de matières solides contenant 25 % d'eau et contenant environ 98 % des matières en suspension dans le lisier. Ces matières solides ne présentent aucune nuisance olfactive.

## Revendications

1. Appareil de séparation par filtration d'une phase solide et d'une phase liquide à partir d'une boue, ledit appareil comportant, d'une part, un filtre (8) et un moyen de compression (6) pour exercer une pression sur la boue au cours de la filtration, de façon à obtenir sur le filtre (8) un gâteau de phase solide et à recueillir une phase liquide ayant traversé le filtre et, d'autre part, un dispositif de râclage (14) pour détacher ledit gâteau de la surface dudit filtre, caractérisé par le fait qu'il comporte une chambre de filtration (2) et que le moyen de compression est un piston (6) susceptible d'un mouvement relatif de translation par rapport à ladite chambre de filtration (2), le mouvement relatif piston/chambre s'effectuant de façon sensiblement étanche aux liquides, le filtre (8) étant susceptible d'un mouvement relatif de translation par rapport à ladite chambre de filtration (2) entre une position de filtration où ledit filtre (8) forme une paroi de ladite chambre de filtration (2) et une position de râclage où le filtre (8) est à l'extérieur de ladite chambre de filtration (2), et que le dispositif de râclage (14) est susceptible de balayer la surface du filtre (8) lorsque le filtre (8) est en position de râclage, pour détacher du filtre (8) le gâteau de phase solide.

2. Appareil selon la revendication 1, caractérisé par le fait que la chambre de filtration (2) est fixe et le piston (6) se déplace selon l'axe de la chambre de filtration (2) entre une position rétractée et une position de compression voisine du filtre (8).

3. Appareil selon la revendication 2, caractérisé par le fait que le filtre (8) se déplace selon le même axe que le piston (6).

4. Appareil selon l'une des revendications 1 à 3, caractérisé par le fait que le dispositif de râclage (14) se déplace dans un plan perpendiculaire à l'axe de la chambre de filtration (2).

5. Appareil selon la revendication 4, caractérisé par le fait que le déplacement du dispositif de râclage (14) est une translation rectiligne.

6. Appareil selon l'une des revendications 1 à 5, caractérisé par le fait que la chambre de filtration (2) est munie d'une conduite d'alimentation (4) en boue comportant une valve (5).

7. Appareil selon l'une des revendications 1 à 6, caractérisé par le fait que la chambre de filtration (2) est munie d'une conduite d'alimentation en eaux de lavage.

8. Appareil selon l'une des revendications 1 à 7, caractérisé par le fait que le filtre (8) fait partie d'un caisson (7), le filtre (8) constituant la face du caisson (7) tournée vers le piston (6).

9. Appareil selon l'une des revendications 1 à 8, caractérisé par le fait que le caisson (7) est relié à une alimentation d'air.

10. Appareil selon la revendication 9, caractérisé par le fait que le caisson (7) comporte une rampe de soufflage (11) envoyant des jets d'air à travers le filtre (8).

11. Appareil selon l'une des revendications 1 à 10, caractérisé par le fait qu'il comporte une seconde chambre (3) communiquant à une extrémité avec la chambre de filtration (2) et ouverte à son extrémité opposée.

12. Appareil selon l'une des revendications 1 à 11, caractérisé par le fait qu'il comporte des vérins pour actionner les déplacements du piston (6), du caisson (7) et du dispositif de râclage (14).

13. Procédé de séparation par filtration d'une phase solide et d'une phase liquide à partir d'une boue, dans lequel on exerce une pression sur la boue au cours de la filtration, caractérisé par le fait que :
- dans un premier stade, on introduit une quantité de boue à filtrer dans une chambre de filtration (2) dont une paroi est constituée par un filtre (8) en position de filtration ;
- dans un deuxième stade, on exerce une pression sur la boue dans la chambre de filtration de façon à obtenir sur le filtre (8) un gâteau de phase solide et à recueillir une phase liquide après son passage à travers le filtre (8) ;
- dans un troisième stade, on supprime la pression, on extrait le filtre (8) de la chambre de filtration, de façon à l'amener à l'extérieur de ladite chambre de filtration (2), on râcle la surface du filtre portant le gâteau de filtration à l'aide d'un dispositif de râclage (14) balayant la surface du filtre (8) portant le gâteau et on recueille la phase solide tombant du filtre (8) ;
- dans un quatrième stade, on ramène le filtre (8) dans sa position de filtration.

14. Procédé selon la revendication 13, caractérisé par le fait qu'entre le troisième et le quatrième stade, on souffle de l'air à travers le filtre (8).

15. Procédé selon l'une des revendications 13 ou 14, caractérisé par le fait qu'on lave le gâteau de filtration.

16. Utilisation d'au moins un appareil selon les revendications 1 à 12 dans le traitement du lisier.

## Claims

1. Apparatus for separation by filtration of a solid phase and a liquid phase from a sludge, the said apparatus comprising, on the one hand, a filter (8) and a compression means (6) for exerting a pressure on the sludge during filtration, so as to obtain on the filter (8) a solid phase cake and to collect a liquid phase which has passed through the filter and, on the other hand, a scraper device (14) for detaching the said cake from the surface of the said filter, characterized in that it comprises a filtration chamber (2) and in that the compression means is a piston (6) capable of a relative translational movement with respect to the said filtration chamber (2), the piston/chamber relative movement being carried out in a substantially liquid-tight manner, the filter (8) being capable of a relative translational movement with respect to the said filtration chamber (2) between a filtration position in which the said filter (8) forms a wall of the said filtration chamber (2) and a scraping position in which the filter (8) is outside the said filtration chamber (2), and in that the scraper device (14) is capable of sweeping the surface of the filter (8) when the filter (8) is in the scraping position, in order to detach the solid phase cake from the filter (8).

2. Apparatus according to Claim 1, characterized in that the filtration chamber (2) is fixed and the piston (6) moves along the axis of the filtration chamber (2) between a retracted position and a compression position close to the filter (8).

3. Apparatus according to Claim 2, characterized in that the filter (8) moves along the same axis as the piston (6).

4. Apparatus according to one of Claims 1 to 3, characterized in that the scraper device (14) moves in a plane perpendicular to the axis of the filtration chamber (2).

5. Apparatus according to Claim 4, characterized in that the displacement of the scraper device (14) is a linear translation.

6. Apparatus according to one of Claims 1 to 5, characterized in that the filtration chamber (2) is provided with a sludge feed conduit (4) comprising a valve (5).

7. Apparatus according to one of Claims 1 to 6, characterized in that the filtration chamber (2) is provided with a wash-water feed conduit.

8. Apparatus according to one of Claims 1 to 7, characterized in that the filter (8) forms part of an enclosure (7), the filter (8) constituting the face of the enclosure (7) turned towards the piston (6).

9. Apparatus according to one of Claims 1 to 8, characterized in that the enclosure (7) is connected to an air supply.

10. Apparatus according to Claim 9, characterized in that the enclosure (7) comprises a blowing pipe (11) sending air jets through the filter (8).

11. Apparatus according to one of Claims 1 to 10, characterized in that it comprises a second chamber (3), communicating at one end with the filtration chamber (2) and open at its opposite end.

12. Apparatus according to one of Claims 1 to 11, characterized in that it comprises actuators for actuating the displacements of the piston (6), of the enclosure (7) and of the scraper device (14).

13. Method for separation by filtration of a solid phase and a liquid phase from a sludge, in which a pressure is exerted on the sludge during filtration, characterized in that:
- in a first step, a quantity of sludge to be filtered is introduced into a filtration chamber (2), one wall of which consists of a filter (8) in the filtration position;
- in a second step, a pressure is exerted on the sludge in the filtration chamber so as to obtain, on the filter (8), a solid phase cake and to collect a liquid phase after it has passed through the filter (8);
- in a third step, the pressure is released, the filter (8) is extracted from the filtration chamber, so as to bring it outside the said filtration chamber (2), the surface of the filter bearing the filter cake is scraped using a scraper device (14) sweeping the surface of the filter (8) bearing the cake and the solid phase falling from the filter (8) is collected;
- in a fourth step, the filter (8) is returned to its filtration position.

14. Method according to Claim 13, characterized in that, between the third and fourth steps, air is blown through the filter (8).

15. Method according to one of Claims 13 or 14, characterized in that the filter cake is washed.

16. Use of at least one apparatus according to Claims 1 to 12 in the treatment of liquid manure.

## Patentansprüche

1. Filtrationsvorrichtung zur Trennung einer festen und einer flüssigen Phase aus einem Schlamm, wobei die genannte Vorrichtung einerseits einen Filter (8) und eine Kompressionsvorrichtung (6) enthält, die während der Filtration auf den Schlamm Druck ausübt, so daß man auf dem Filter (8) einen Kuchen einer festen Phase erhält und eine flüssige Phase zurückbehält, die den Filter durchlaufen hat, und andererseits eine Abschabvorrichtung (14) zum Lösen des genannten Kuchens von der Oberfläche des genannten Filters, dadurch gekennzeichnet, daß sie eine Filterkammer (2) enthält und daß die Kompressionsvorrichtung aus einem Kolben (6) besteht, der dazu fähig ist, eine relative translatorische Bewegung gegenüber der genannten Filterkammer (2) auszuführen, wobei die Relativbewegung Kolben/Kammer bei einer hohen Dichtigkeit gegenüber den Flüssigkeiten erfolgt, wobei der Filter (8) dazu fähig ist, eine relative translatorische Bewegung gegenüber der genannten Filterkammer (2) auszuführen, und zwar zwischen einer Filtrationsposition, in der der genannte Filter (8) eine Wand der genannten Filterkammer (2) bildet, und einer Abschabposition, in der sich der Filter (8) außerhalb der genannten Filterkammer (2) befindet, und daß die Abschabvorrichtung (14) fähig ist, über die Oberfläche des Filters (8) zu streichen, wenn sich der Filter (8) in der Abschabposition befindet, um den Kuchen der festen Phase von dem Filter (8) zu lösen.

2. Vorrichtung nach Anspruch 1, dadurch gekennzeichnet, daß die Filterkammer (2) unbeweglich ist und sich der Kolben (6) auf der Achse der Filterkammer (2) bewegt, und zwar zwischen einer zurückgezogenen Position und einer an den Filter (8) angrenzenden Druckposition.

3. Verfahren nach Anspruch 2, dadurch gekennzeichnet, daß sich der Filter (8) auf derselben Achse wie der Kolben (6) bewegt.

4. Vorrichtung nach einem der Ansprüche 1 bis 3, dadurch gekennzeichnet, daß sich die Abschabvorrichtung (14) in einer Ebene bewegt, die senkrecht zur Achse der Filterkammer (2) liegt.

5. Vorrichtung nach Anspruch 4, dadurch gekennzeichnet, daß die Bewegung der Abschabvorrichtung (14) eine geradlinige Bewegung ist.

6. Vorrichtung nach einem der Ansprüche 1 bis 5, dadurch gekennzeichnet, daß die Filterkammer (2) mit einer schlammgefüllten Druckleitung (4) ausgerüstet ist, die ein Ventil (5) aufweist.

7. Vorrichtung nach einem der Ansprüche 1 bis 6, dadurch gekennzeichnet, daß die Filterkammer (2) mit einer Druckleitung ausgerüstet ist, die Wasser zum Waschen enthält.

8. Vorrichtung nach einem der Ansprüche 1 bis 7, dadurch gekennzeichnet, daß der Filter (8) Teil einer Kammer (7) ist, wobei der Filter (8) die in Richtung des Kolbens (6) gerichtete Stirnseite der Kammer (7) bildet.

9. Vorrichtung nach einem der Ansprüche 1 bis 8, dadurch gekennzeichnet, daß die Kammer (7) mit einer Luftzufuhr verbunden ist.

10. Vorrichtung nach Anspruch 9, dadurch gekennzeichnet, daß die Kammer (7) eine Luftleitvorrichtung (11) enthält, die Luftstrahlen durch den Filter (8) pumpt.

11. Vorrichtung nach einem der Ansprüche 1 bis 10, dadurch gekennzeichnet, daß sie eine zweite Kammer (3) enthält, deren eines Ende an die Filterkammer (2) grenzt und deren entgegengesetztes Ende offen ist.

12. Vorrichtung nach einem der Ansprüche 1 bis 11, dadurch gekennzeichnet, daß sie Zylinder enthält, die die Bewegungen des Kolbens (6), der Kammer (7) und der Abschabvorrichtung (14) lenken.

13. Verfahren zur Trennung einer festen und einer flüssigen Phase aus einem Schlamm durch Filtration, in welchem während der Filtration Druck auf den Schlamm ausgeübt wird, dadurch gekennzeichnet, daß:
- in einem ersten Schritt eine bestimmte Menge des zu filternden Schlamms in die Filterkammer (2) gegeben wird, deren eine Seitenwand durch einen in Filterposition stehenden Filter (8) gebildet wird;
- in einem zweiten Schritt Druck auf den Schlamm in der Filterkammer ausgeübt wird, so daß man auf dem Filter (8) einen Kuchen einer festen Phase erhält und nach Durchlaufen des Filters (8) eine flüssige Phase zurückbehält;
- in einem dritten Schritt der Druck aufgehoben wird, der Filter (8) aus der Filterkammer herausgezogen wird, so daß er sich außerhalb der genannten Filterkammer (2) befindet, die den Filterkuchen tragende Filteroberfläche mit Hilfe einer Abschabvorrichtung (14) abgeschabt wird, die über die Oberfläche des mit dem Kuchen bedeckten Filters (8) streicht, und die aus dem Filter (8) fallende feste Phase zurückbehalten wird;
- in einem vierten Schritt der Filter (8) in seine Filterposition zurückgebracht wird.

14. Verfahren nach Anspruch 13, dadurch gekennzeichnet, daß zwischen dem dritten und dem vierten Schritt Luft durch den Filter (8) geblasen wird.

15. Verfahren nach Anspruch 13 oder 14, dadurch gekennzeichnet, daß der Filterkuchen gewaschen wird.

16. Verwendung mindestens eines Apparates nach den Ansprüchen 1 bis 12 in der Güllebehandlung.
